# Europäisches Patentamt
## European Patent Office
## Office européen des brevets

(19)

(11) Publication number: **0 139 055**
**B1**

(12) **EUROPEAN PATENT SPECIFICATION**

(45) Date of publication of patent specification: **09.12.87**

(51) Int. Cl.⁴: **A 23 K 1/18**, A 23 K 1/16

(21) Application number: **83306418.1**

(22) Date of filing: **21.10.83**

(54) Poultry feedstuff.

(43) Date of publication of application:
**02.05.85 Bulletin 85/18**

(45) Publication of the grant of the patent:
**09.12.87 Bulletin 87/50**

(84) Designated Contracting States:
**BE DE FR GB IT NL**

(56) References cited:
GB-A- 752 245
GB-A-1 428 181
GB-A-1 515 562
GB-A-1 576 528

AGRICULTURAL AND BIOLOGICAL
CHEMISTRY, vol. 34, no. 9, 1970, pages 1308-
1313, Tokyo, JP; M.YOSHIDA et al.:
"Availability of energy in alcohols, aldehydes
and ketones by growing chicks"

(73) Proprietor: **BP NUTRITION (UK) LIMITED**
**Stepfield Witham**
**Essex, CM8 3AB (GB)**

(72) Inventor: **Perry, Frederick George**
**c/o BP Nutrition (UK) Limited**
**Stepfield, Witham, Essex CM8 3AB (GB)**
Inventor: **Vernon, Brian Geoffrey**
**70 Slade Road**
**Portishead Bristol (GB)**

(74) Representative: **Crack, Richard David et al**
**BP INTERNATIONAL LIMITED Patents Division**
**Chertsey Road**
**Sunbury-on-Thames Middlesex TW16 7LN (GB)**

(56) References cited:
BRITISH POULTRY SCIENCE, vol. 22, no. 4,
1981, pages 323-331, British Poultry Science
Ltd., GB; T.G.H.SHURLOCK et al.: "Factors
affecting food intake in the domestic chicken:
the effect of infusions of nutritive and non-
nutritive substances into the crop and
duodenum"

0 139 055

**Description**

This invention relates to feeding poultry with a diet containing a polyhydric alcohol.

A bird food containing sorbitol has been proposed. Thus, UK Patent No. 1428181 describes and claims a food for granivorous birds comprising at least one substance supplying vitamins, at least one substance supplying amino acids, inorganic salts supplying trace elements, at least one preservative and at least one flavouring agent; the food having the form of pellets resembling natural grain or seeds in appearance and containing 0.1 to 0.5% by weight humectant which confers on the pellets a softened texture resembling the kernel of natural grains. The humectant may be propylene glycol or sorbitol.

In this prior proposal the sorbitol is present to soften the food. The food is designed for cage birds such as canaries and it is intended to imitate and resemble the natural grain or seeds normally fed to such birds.

It has now been found that sorbitol when included in diets for poultry, particularly meat-producing poultry, has a growth promoting effect. Without being bound by any theory, it is believed that the beneficial effect results from the fact that the polyhydric alcohol acts as an emulsifier for lipids and, thus, improves lipid digestibility. The use of the sorbitol is particularly preferred for poultry diets with lipid contents of from 2.5 to 20% wt of lipid by weight of total feed.

According to the present invention, therefore, a method of feeding poultry comprises feeding to the poultry a feedstuff containing from 0.01 to 1% wt of sorbitol. References to % by weight refer to the weight of the total feed.

The diet may be used for any poultry (including turkeys, ducks, and geese) but is particularly suitable for broiler chickens (i.e. poultry raised rapidly from day-old chicks to a weight suitable for consumption). It has been found that the addition of as little as 0.1% wt of sorbitol in the diet increases the growth rate (as measured by the average live weight gain per unit of time) and reduces the Feed Conversion Ratio (FCR).

The other components of the diet may be the normal components for poultry feed and include sources of carbohydrate, protein, lipids (i.e. fats and oils), fibre, vitamins, amino-acids, and minerals. The principles of poultry feeding are well understood in the industry and the term "poultry diet" would be understood as differentiating the diet from that of other livestock such as cattle or pigs. Poultry are omnivorous, rather than granivorous, and do not detect flavours. There is no point, therefore, in including any flavouring agent in the feed, as required by the above-mentioned prior art.

The method of including the sorbitol in the poultry diet may vary and the present invention includes a poultry feedstuff containing from 0.01 to 1% wt of sorbitol.

The feedstuff component may be a feed-supplement of the sorbitol on an organic or inorganic carrier e.g. biscuit meal of powdered limestone. It may be a premix of the sorbitol with one or more other feed components e.g. a sorbitol-vitamin and/or mineral premix or it may be a complete feed. Whatever the form the component may be admixed with other components at an appropriate stage in the feed manufacturing process and in the appropriate amount to ensure that the required amount of sorbitol is included in the poultry diet.

The feeding pattern may follow standard practice. Thus, feeding will normally be ad lib with, for broilers, feeds being adjusted as they grow. For example starter and finisher feeds may be used, with one or more intermediate feeds if required.

The invention is illustrated by the following comparative examples.

Example 1

Three poultry feeds were made up from the following constituents: maize, wheat, soya meal, full fat soya, fish meal, fat, minerals, vitamins and amino acids.

The proportions were varied slightly to give Super Starter, Starter and Rearer Feeds with the following compositions:

|  | Super starter | Starter | Rearer |
|---|---|---|---|
| Lipid | 6.5% wt | 8.3% wt | 8.0% wt |
| Protein | 22.7% wt | 20.7% wt | 18.0% wt |
| Fibre | 2.9% wt | 2.9% wt | 2.8% wt |
| Lysine | 1.4% wt | 0.26% wt | 1.04% wt |
| Methionine and Cysteine | 0.91% wt | 0.87% wt | 0.76% wt |
| Metabolisable Energy | 1390 KCals/lb | 1420 KCals/lb | 1450 KCals/lb |

0.1% wt of sorbitol was added to half of these feeds by adding it to the vitamin-mineral premix, which was then added to the mix in the normal way.

2

**0 139 055**

**Claims**

1. A method of feeding poultry comprising feeding to the poultry a feedstuff containing from 0.01 to 1% wt of sorbitol.

2. A method as claimed in claim 1 wherein the poultry are broiler chickens.

3. A method as claimed in claim 1 or 2 wherein the feedstuff contains from 2.5 to 20% wt of lipid.

4. A poultry feedstuff containing from 0.01 to 1% wt, by weight of feed, of sorbitol.

5. A poultry feedstuff as claimed in claim 4 containing also from 2.5 to 20% wt of lipid.

**Patentansprüche**

1. Verfahren zur Geflügelfütterung, dadurch gekennzeichnet, daß das Geflügel mit einem 0,01 bis 1 Gew.-% Sorbit enthaltenden Futter gefüttert wird.

2. Verfahren nach Anspruch 1, dadurch gekennzeichnet, daß das Geflügel aus zum Braten bzw. Grillen vorgesehenen Junghähnchen und -hühnern besteht.

3. Verfahren nach Ansprüchen 1 oder 2, dadurch gekennzeichnet, daß das Futter 2,5 bis 20 Gew.-% Lipids enthält.

4. Geflügelfutter, enthaltend, bezogen auf das Gewicht des Futters, 0,01 bis 1 Gew.-% Sorbit.

5. Geflügelfutter nach Anspruch 4, enthaltend außerdem 2,5 bis 20 Gew.-% Lipids.

**Revendications**

1. Procédé pour nourrir des volailles, comprenant la fourniture aux volailles d'une nourriture contenant 0,01 à 1% en poids de sorbitol.

2. Procédé selon la revendication 1, dans lequel la volaille est constituée par des poulets à rôtir.

3. Procédé selon la revendication 1 ou 2, dans lequel la nourriture contient 2,5 à 20% en poids de lipides.

4. Nourriture pour volailles contenant de 0,1 à 1% en poids de sorbitol, par rapport au poids de la nourriture.

5. Nourriture pour volailles selon la revendication 4, contenant également de 2,5 à 20% en poids de lipides.